# EUROPÄISCHE PATENTSCHRIFT

(11) **EP 0 318 966 B1**
(45) Veröffentlichungstag und Bekanntmachung des Hinweises auf die Patenterteilung: **02.03.1994**
(21) Anmeldenummer: 88119994.7
(22) Anmeldetag: 30.11.1988
(51) Int. Cl.: B24B 5/42, B24B 41/00

(54) **Maschine zur Oberflächenbearbeitung mit Vorrichtungen zur Positionierung von Bearbeitungswerkzeugen**
Machine for processing surfaces with a device for positioning work tools
Machine pour l'usinage de surfaces avec dispositif de positionnement d'outils

(30) Priorität: 30.11.1987 DE 3740597
(43) Veröffentlichungstag der Anmeldung: 07.06.1989
(73) Patentinhaber: Maschinenbau Grieshaber GmbH & Co., D-77709 Wolfach (DE)
(72) Erfinder: Weber, Wilfried, Dipl.-Ing., D-7406 Mössingen (DE)
(74) Vertreter: Dreiss, Fuhlendorf, Steimle & Becker, Patentanwälte

(56) Entgegenhaltungen:
- EP-A- 0 167 659
- DE-A- 3 008 606
- FR-A- 1 464 245
- FR-A- 2 595 970
- US-A- 2 457 359
- US-A- 4 030 252
- PATENT ABSTRACTS OF JAPAN, Band 9, Nr. 34 (M-357)[1757], 14. Februar 1985;& JP-A-59 175 949 (TOYODA KOKI) 05-10-1984
- PATENT ABSTRACTS OF JAPAN, Band 7, Nr. 59 (M-199)[1204], 11 März 1983;& JP-A-57205 057 (NITSUPEI SANGYO) 16-12-1982
- FACHBERICHTE FÜR OBERFLÄCHENTECHNIK, Band 8, Nr. 9/10, 1970, Seiten 203-208; G.HAASIS: "Bandfinishen - ein wirtschaftliches Feinbearbeitungsverfahren"

## Beschreibung

Die vorliegende Erfindung bezieht sich auf eine Maschine zum Feinstarbeiten von rotationssymmetrischen Oberflächenabschnitten auf wellenförmigen Werkstücken, vorzugsweise zum Oberflächenbearbeiten der Lagerstellen auf Nocken- oder Kurbelwellen, mit unterschiedliche wellenförmige Werkstücke aufnehmenden Bearbeitungsstationen mit einem in der Achse des aufgenommenen Werkstücks verfahrbaren und feststellbaren Schlitten, wobei der Schlitten mehrere auswechselbare Werkstückbearbeitungseinrichtungen tragt, von welchen eine beliebige Anzahl untereinander auf Abstand einstellbar und gemeinsam mit dem Schlitten in Bezug auf das Werkstück positionierbar sind.

Die Werkstücke können beispielsweise Nocken- oder Kurbelwellen sein. Die Bearbeitungsmaschine und Positioniervorrichtung wird im folgenden beispielhaft anhand dieser wellenförmigen Werkstücke beschrieben. Derartige Wellen weisen im axialen Abstand zueinander rotationssymmetrische Oberflächen auf, welche Lager darstellen. In diesen Lagerstellen wird entweder die Welle selbst gelagert oder es greifen um diese Lager andere Teile einer Maschine, beispielsweise Pleuel von Kolben einer Brennkraftmaschine oder Pumpe oder Verdichters.

Es ist bekannt, diese rotationssymmetrischen Flächen einer abtragenden Oberflächenbehandlung durch Schleifen oder Superfinishen zu unterziehen, um die Rundheit und Oberflächengüte zu verbessern. Ein Superfinishstein wird auf die zu bearbeitende Stelle aufgesetzt und paßt sich der Krümmung der Werkstückstelle an. Er führt eine Schwingbewegung in axialer Richtung durch. Das Werkstück rotiert. Es ist aber auch bekannt, anstelle eines steinförmigen Werkzeuges oder zusätzlich zu einem profilierten Stein ein Schleifband zu verwenden (US-PS 1 908 048), wodurch eine läppende Bearbeitung ermöglicht wird. Andere Schleifverfahren sind ebenfalls anwendbar.

Es ist ferner bekannt für wellenförmige Werkstücke, die Bearbeitung aller axial nebeneinanderliegenden Lagerstellen gleichzeitig vorzunehmen, auch beispielsweise bei der Bearbeitung von Kurbelwellenzapfen, deren kreissymmetrische Oberflächen um den Kurbelradius aus der Achse der Welle herausbewegt werden. Dann ist es erforderlich, Einrichtungen verfügbar zu machen, die dieser Auslenkung folgen (US-PS 2 270 552 oder US-PS 1 993 543).

Die gleichzeitige Bearbeitung aller Lagerstellen einer Welle genügt aber nicht den durch die fortschreitende Automatisierung gestiegenen Anforderungen bei der schnellen Bereitstellung solcher fertig- und mit höchstem Qualitätsgrad bearbeiteten Wellen als Einzelteile in einem Herstellprozeß für Arbeits- oder Kraftmaschinen. Vielmehr erfordern vollständig oder nahezu vollständig automatisierte Verfahren die taktmäßige Verarbeitung und Bereitstellung von gleichartigen Werkstücken, wie etwa Nockenwellen oder Kurbelwellen. Dennoch soll eine automatische Bearbeitungsmaschine durch einfaches Umrüsten auf die Bearbeitung von verschiedenen Werkstücken problemlos umstellbar sein.

Bei jeder Art von zu bearbeitenden Wellen soll aber auch ein Mischbetrieb möglich sein. Es sollen ohne großen Umrüstaufwand beliebig lange und beliebig gestaltete Nockenwellen, d.h. mit unterschiedlichen Abständen zwischen den Nocken und dem Anfang und Ende der Nockenwelle sowie zwischen den Nocken befindlichen Lagerflächen so fertig bearbeitet werden, daß Wellen mit völlig unbearbeiteten Lagerstellen eingelegt und hinter der Maschine nach einer automatischen Bearbeitung einbaufertig entnommen werden können. Das Einlegen und Entnehmen soll ebenfalls automatisch möglich sein. Hierfür müssen die Einlege- und Entnahmestationen eingerichtet sein. Diese Forderung gilt für Nockenwellen ebenso wie für Kurbelwellen. Für beide Bauteile müssen unterschiedliche Arten von Lagerstellen bearbeitet werden können. Zumindest eine Lagerstelle einer beliebigen Art von Wellen weist zum Beispiel zu bearbeitende radiale Flächen auf, um axiale Kräfte aufzunehmen oder um ein axiales Spiel zu vermeiden. Diese radialen Flächen müssen ebenso bearbeitet werden wie ringfömige ballige Oberflächen von teilweise erheblicher, auf alle Fälle aber unterschiedlicher axialer Erstreckung. Randzonen sind ebenfalls zu bearbeiten, auch wenn diese Randzonen Krümmungsradien aufweisen.

Derartige Maschinen sind z.B. aus der EP-A1-0 167 659 bekannt. Bei dieser Maschine sind mehrere Werkstückbearbeitungseinrichtungen parallel zur Achse des Werkstücks verschiebbar und auf bestimmte Positionen einstellbar. Auf diese Weise kann die Maschine an unterschiedlich ausgestaltete Werkstücke angepaßt werden. Als nachteilig hat sich herausgestellt, daß jede einstellbare Werkstückbearbeitungseinrichtung mit einer separaten Transporteinrichtung versehen ist, was den konstruktiven Aufwand und die Herstellungskosten erhöht.

Die Erfindung sieht vor, daß zum automatischen Einstellen der gegenseitigen Abstände der Werkstückbearbeitungseinrichtungen eine gemeinsame Transporteinrichtung vorgesehen ist, die einen auf dem Schlitten angeordneten Träger, auf dem die Werkstückbearbeitungseinrichtungen verschiebbar und arretierbar geführt werden, und Verriegelungseinrichtungen zum Fixieren der Werkstückbearbeitungseinrichtungen am Maschinenständer in einer Wartestellung umfaßt, so daß die Werkstückbearbeitungseinrichtungen mit dem Schlitten aus der Wartestellung in vorbestimmbare Abstände zueinander verfahrbar sind und sich in diesen Positionen am Träger verriegeln lassen.

Die hintereinander angeordneten Bearbeitungsstationen übergreifen einen sie verbindenden Endlosförderer und sind untereinander im Prinzip gleich ausgebildet. Sie weisen nämlich grundsätzlich eine beliebige Vielzahl von einzelnen Werkstückbearbeitungseinrichtungen auf, welche selbst alle auswechselbar sind, um ein flexibles System zu ermöglichen. Die weitere Besonderheit besteht darin, daß die Werkstückbearbeitungseinrichtungen zunächst eine seitliche Parkposition einnehmen können.

In der Parkposition können alle Werkstückbearbeitungseinrichtungen, die nicht benötigt werden, verriegelt und diese nebeneinander auch abgestellt werden. Aus dieser Parkposition und noch seitlich von der Bearbeitungsposition lassen sich nach einem Entriegeln die Werkstückbearbeitungseinrichtungen auf die exakten Abstände zueinander ausrichten. Dies geschieht durch Verfahren der einzelnen Werkstückbearbeitungseinrichtungen auf einem alle Einrichtungen tragenden Träger, welcher längs in jeder Bearbeitungsstation angeordnet ist. Dieser Träger befindet sich quer zu dem Endlosförderer und parallel zu den wellenförmigen Werkstücken. Mit einer mechanischen Einrichtung, einer mit elektrischen Drehantrieb versehene Schraubspindel, einer pneumatischen oder hydraulischen Einrichtung, lassen sich die Werkstückbearbeitungseinrichtungen auf dem Träger in die gewünschte Position zueinander bringen, wobei jeweils eine entriegelte Einrichtung gegenüber den anderen verriegelten Einrichtungen bewegbar ist. Die Verriegelung kann aus einer Indexeinrichtung oder aus einer Klemmung bestehen. Nehmen alle Werkstückbearbeitungseinrichtungen ihre exakten Anstände zueinander entsprechend den Abständen der zu bearbeitenden rotationssymmetrischen Flächenabschnitte auf dem wellenförmigen Werkstück ein, dann läßt sich der Träger, auf dem sich alle Werkstückbearbeitungseinrichtungen befinden, in der Bearbeitungsstation parallel zu sich selbst soweit verfahren, bis die genaue Position gegenüber dem Werkstück eingenommen worden ist. Die Verstellbewegung kann vorteilhafterweise mit derselben Einrichtung vorgenommen werden, mit der auch die Abstände der einzelnen Werkstückbearbeitungseinrichtungen auf dem Träger eingerichtet worden ist. Es kann auch eine Verriegelung des Trägers gegenüber der Bearbeitungsstation stattfinden.

Ein weiterer Vorteil ist, daß eine beliebige Anzahl von Werkstückbearbeitungseinrichtungen auf dem Träger positioniert werden kann. Somit läßt sich die Flexibilität der Maschine steigern. Es ist beispielsweise möglich, nur eine oder nur zwei Werkstückbearbeitungseinrichtungen pro Bearbeitungsstation zu positionieren und am Werkstück angreifen zu lassen. Die übrigen Werkstückbearbeitungseinrichtungen verbleiben verriegelt in ihren Parkpositionen seitlich vom Werkstück bzw. seitlich von dessen Einspannung, so daß diese nicht aktuell eingesetzten Werkstückbearbeitungseinrichtungen einerseits keine Behinderung darstellen und andererseits bei Bedarf schnell verfügbar sind.

Die Bearbeitung der Werkstücke kann durch die Mehrzahl der längs des Endlosförderers aufgebauten Stationen entweder mehrstufig in der Weise erfolgen, daS auf einer folgenden Station eine Nachbearbeitung derselben Oberfläche stattfindet oder einzelne zu dicht beieinander liegende Bearbeitungsflächen, die wegen ihrer geometrischen Nähe nicht in einer Station bearbeitet werden können, lassen sich in aufeinanderfolgenden Stationen nacheinander bearbeiten, oder es können einzelne Stationen für Sonderbearbeitungen ausgelegt sein.

Eine Sonderbearbeitung kann beispielsweise darin bestehen, daß in dieser Station das Werkstück nicht nur in eine rotierende Bewegung, sondern überlagernd in eine axiale oszillierende Bewegung versetzt wird. Dadurch läßt sich vorteilhafterweise ein diagonal verlaufender Schliff auf einer rotationssymmetrischen Lagerfläche eines wellenförmigen Werkstückes aufbringen.

Die Werkstückrotationsrichtung läßt sich ferner auch umkehren.

Die Werkstückbearbeitungseinrichtung ist, wie oben schon erwähnt, austauschbar, um durch Einsatz verschiedener Werkstückbearbeitungseinrichtungen die Maschine flexibel zu machen. So lassen sich beispielsweise übliche Superfinishgeräte mit oszillierenden Steinen an einem gelenkig aufgehängten Arm als eine Werkstückbearbeitungseinrichtung einsetzen. Dieses Gerät oder andere Geräte können so in der Werkstückbearbeitungseinrichtung aufgehängt werden, daß die profilierten Steine während ihrer Bearbeitung der um die Achse einer sich drehenden Kurbelwelle taumelnden Lagerfläche eines Pleuellagers folgen.

Es läßt sich statt eines Superfinishgerätes ein Bandfinishgerät mit einem auf Spulen angeordneten Vorrat von Schleifband in schmaler Bauform einsetzen. Solche Bandfinishgeräte sind an sich bekannt. Deren Anpassung an die Maschine gemäß vorliegender Erfindung bedingt jedoch Lösungen, die nicht einfach aus dem Bekannten ableitbar sind, sondern besonderer Erwägungen bedürfen.

So besteht ein in die Maschine gemäß der vorliegenden Erfindung einsetzbares Bandfinishgerät aus einer pneumatisch oder hydraulisch schliebaren Zange, welche die zu bearbeitende rotationssymmetrische Fläche umfängt, sobald das Gerät in Position gebracht ist. In die offene Zangenstellung wird die zu bearbeitende Stelle von dem Endlosförderer gebracht, wie noch nachstehend näher erläutert werden wird. Durch die Beaufschlagung mit dem unter Druck stehenden Arbeitsmedium wird die Zange geschlossen und damit der erforderliche Anpreßdruck aufgebracht. Die Öffnungs- und Schließbewegung der Zange wird erfindungsgemäß dazu benutzt, das Schleifband um das erforderliche Maß für eine nächste Bearbeitung weiterzutransportieren.

Dieses Bandfinishgerät ist ferner mit der Besonderheit ausgestattet, daß das gespannte Schleifband über eine Umlenkrolle geführt ist, welche in Umfangsrichtung eine Nut aufweist. Bei einem Bandriß fällt ein federbeaufschlagter Tastbolzen in diese Nut und löst durch diese Bewegung eine Fehlermeldung aus, welche die Maschine stillsetzt.

Die unterschiedlichen verwendbaren Werkstückbearbeitungseinrichtungen sind in Kassetten untergebracht. Diese Kassetten nehmen zum Beispiel bei der Verwendung eines Bandfinshgeräts auch das Schleifband samt zugehöriger Vorratsstoffe und den Zuführeinrichtungen auf. Damit ist ein schneller und vereinheitlichter Wechsel der Werkstückbearbeitungseinrichtungen gewährleistet.

Weitere Einzelheiten, Merkmale und Vorteile der Erfindung ergeben sich aus der folgenden Beschreibung eines schematisch zeichnerisch dargestellten Ausführungsbeispiels und deren Ergänzungen. Als zu bearbeitende Werkstücke sind dabei beispielhafte Kurbel-/Nockenwellen dargestellt.

Es zeigen:
- Figur 1: eine schematisch perspektivische Darstellung des Zusammenwirkens der wesentlichen Teile der Maschine,
- Figur 2: einen schematischen, nicht maßstabsgetreuen Schnitt durch eine Bearbeitungsposition entlang der Linie A-A in Fig. 1,
- Figur 3: einen gleichen Schnitt wie Fig. 2 jedoch in einer anderen Stellung und
- Figur 4: einen gleichen Schnitt wie Fig. 2 jedoch in einer endgültig zum Werkstück ausgerichteten Arbeitsposition.

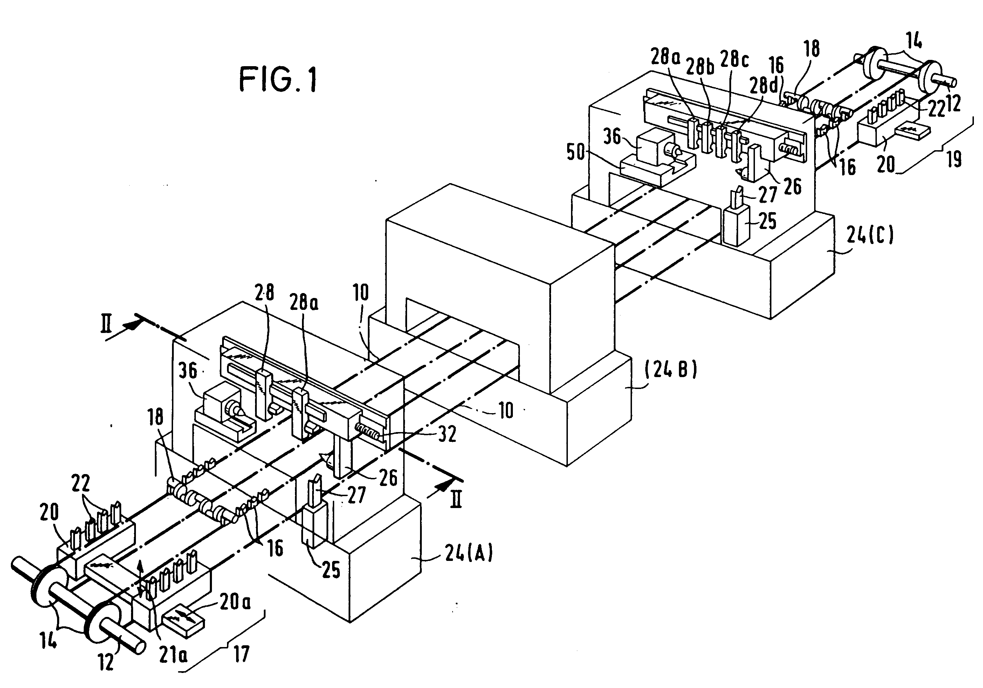

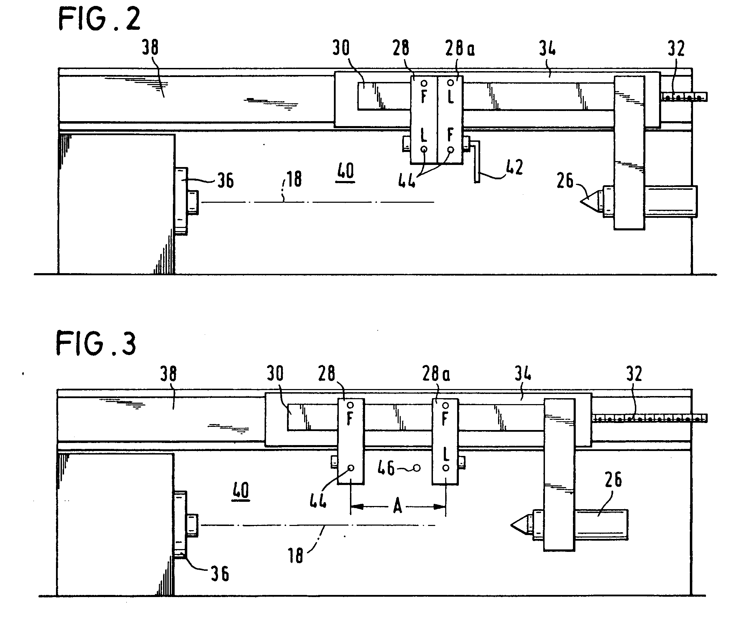

Figur 1 zeigt eine teilweise schematisierte perspektivische Gesamtansicht einer mehrstationigen Finish-Maschine. Sie besteht aus einem endlosen Kettenförderer, der aus zwei gleichen Einzelketten 10 gebildet wird. Über den Kettenförderer werden die Werkstücke 18 zu ihren einzelnen Bearbeitungsstationen 24 befördert. Zur Bearbeitung und evtl. Zwischenlagerung in diesen Arbeitsstationen 24 werden die Werkstücke 18 mit einem Lift 25 mit Werkstückaufnehmer 27 wieder vom Kettenförderer abgehoben. Das Werkstück 18 wird in die Ebene eines Reitstocks 26 gehoben und von diesem und einer axial verschiebbaren Spannspindel 36 erfaßt. Die Spannspindel 36 ist mit einem Antrieb verbunden, um das Werkstück 18 um seine Achse in Drehung zu versetzen. Werkstücke 18 wie Kurbelwellen oder Nockenwellen weisen mehrere Lager auf, die von mehreren parallelen Schleifwerkzeugen gleichzeitig Nockenwellen bearbeiten zu können, sind die einzelnen Schleifwerkzeuge frei zueinander positionierbar, wie dies die Figuren 2 bis 4 zeigen. Dieses Positioniersystem besteht aus einem Träger 30, auf dem einzelne Werkstückbearbeitungseinrichtungen 28 verschieb- und arretierbar geführt werden. Dieser Träger 30 ist auf einem durch eine Gewindespindel 32 bewegbaren Schlitten 34 angeordnet.

Der bewegliche Schlitten 34 wird in einer Schlittenführung 38 geführt. Mit dem Schlitten 34 fest verbunden ist der Spindelstock 26. Die einzelnen Werkstückbearbeitungseinrichtungen 28 sind in ihrer Wartestellung zusätzlich noch mit Indexstiften 44, die in entsprechende Indexlöcher 46 am Maschinenständer 40 greifen, fixierbar.

Bei jedem Werkstuckwechsel ist ein neues Positionieren der Werkstückbearbeitungseinrichtungen 28 notwendig, das folgendermaßen abläuft. Die auf dem Träger 30 gespannten Werkstückbearbeitungseinrichtungen 28 werden gespannt. Der Schlitten 34 wird über die Gewindespindel 32 in seine rechte Endstellung gefahren (Fig. 2).

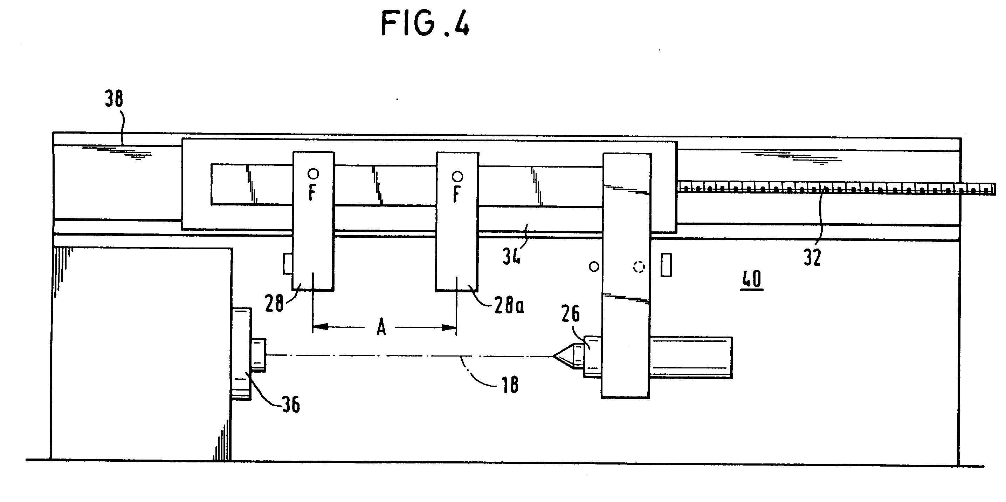

Durch einen am Maschinenständer 40 angebrachten Endanschlag 42 werden die Werkstückbearbeitungseinrichtungen 28 dicht nebeneinander aufgereiht. Sie werden in dieser Wartestellung mit Indexstiften 44, die in Indexlöcher 46 am Maschinenständer 40 greifen, am Maschinenständer 40 fixiert. Dann wird, gemäß Fig. 3, die dem Werkstück 18 am nächsten befindliche Werkstückbearbeitungseinrichtung 28 auf dem Träger 20 geklemmt (F) und gleichzeitig sein Indexstift 44 gelöst (L). Der Schlitten 34 wird nun mit der Gewindespindel 32 in den Arbeitsraum so weit bewegt, daß der Abstand A zur nächsten Werkstückbearbeitungseinrichtung 28a, die noch in der Wartestellung mit ihren Indexstiften 44 am Maschinenständer 40 festliegt, gleich dem Abstand A zweier Lagerstellen des Werkstücks 18 ist. Die nächste der sich in Wartestellung befindlichen Werkstückbearbeitungseinrichtung 28a wird vom Maschinenständer 40 gelöst (L) und am Träger 30 (F) geklemmt. Der Schlitten 34 fährt nun wieder weiter in den Arbeitsraum, bis der nächste gewünschte Abstand eingestellt ist. Auf diese Weise werden alle Werkstückbearbeitungseinrichtungen 28 in ihre gewünschte Position relativ zueinander gebracht. Der Schlitten 34 als Ganzes kann dann noch getrennt zur Kurbelwelle 18 zugestellt werden (Fig. 4).

Die Größe der Abstände der einzelnen Werkstückbearbeitungseinrichtungen 28 ist proportional zu der Zahl der Umdrehungen der Gewindespindel 32 und kann auf diese Weise einfach einer programmierbaren Steuerung unterworfen werden.

Die Werkstückbearbeitungseinrichtungen 28 können in Form von auswechselbaren Kassetten Schleifwerkzeuge verschiedener Art aufnehmen, wie z.B. Steinhalter oder Schleifvorrichtungen mit von Anpreßschuhen an die Welle gepreßtem Schleifband. Auch ein Drehen der Schleifvorrichtung um 90° zur Feinbearbeitung von senkrechten Flächen ist möglich.

In die in Fig. 1 beispielhaft dargestellte dritte Bearbeitungsstation 24(C) sind vier Werkstückbearbeitungseinrichtungen 28a-d eingezeichnet. In dieser Station 24(C) kann zusätzlich zur Drehbewegung über den Antrieb 36 eine axiale hin- und hergehende Bewegung des Werkstücks 18 stattfinden. Hierfür ist der Antrieb 36 in seinem Schlitten 50 beweglich und der Reitstock 26 erhält ebenfalls gegen die Wirkung einer Feder in derselben axialen Richtung eine Bewegungsfreiheit. Auf diese Weise läßt sich in den Lagerflächen ein Kreuzschliff diagonal aufbringen.

## Patentansprüche

1. Maschine zum Feinstbearbeiten von rotationssymmetrischen Oberflächenabschnitten auf wellenförmigen Werkstücken (18), vorzugsweise zum Oberflächenbearbeiten der Lagerstellen auf Nocken- oder Kurbelwellen, mit unterschiedliche wellenförmige Werkstücke (18) aufnehmenden Bearbeitungsstationen (24) mit einem in der Achse des aufgenommenen Werkstücks (18) verfahrbaren und feststellbaren Schlitten (34), wobei der Schlitten (34) mehrere auswechselbare Werkstückbearbeitungseinrichtungen (28) trägt, von welchen eine beliebige Anzahl untereinander auf Abstand (A) einstellbar und gemeinsam mit dem Schlitten (34) in Bezug auf das Werkstück (18) positionierbar sind, dadurch gekennzeichnet, daß zum automatischen Einstellen der gegenseitigen Abstände (A) der Werkstückbearbeitungseinrichtungen (28) eine gemeinsame Transporteinrichtung vorgesehen ist, die einen auf dem Schlitten (34) angeordneten Träger (30), auf da die Werkstückbearbeitungseinrichtungen (28) verschiebbar und arretierbar geführt werden, und Verriegelungseinrichtungen zum Fixieren der Werkstückbearbeitungseinrichtungen (28) am Maschinenständer in einer Wartestellung umfaßt, so daß die Werkstückbearbeitungseinrichtungen (28) mit dem Schlitten (34) aus der Wartestellung in vorbestimmbare Abstände zueinander verfahrbar sind und sich in diesen Positionen am Träger (30) verriegeln lassen.

2. Maschine nach Anspruch 1, dadurch gekennzeichnet, daß die gemeinsame Transporteinrichtung als hydraulische oder pneumatische Einrichtung ausgebildet ist.

3. Maschine nach Anspruch 1 oder 2, dadurch gekennzeichnet, daß die gemeinsame Transporteinrichtung als motorisch angetriebene Gewindespindel (32) ausgebildet ist, deren Drehstellung in einem Programmspeicher ablegbar und aus diesem abrufbar ist.

4. Maschine nach einem der vorhergehenden Ansprüche, dadurch gekennzeichnet, daß jede Bearbeitungsstation (24) einen oder mehrere nebeneinander angeordnete Lifte (25) und Werkstückaufnehmer (27) aufweist, von denen das mittlere Paar zu einer drehbar angetriebenen Werkstückspanneinrichtung (36) und einem axial hierzu ausgerichteten Reitstock (26) so ausgerichtet ist, daß ein wellenförmiges Werkstück (18) an seinen Enden erfaßbar ist.

5. Maschine nach einem der vorhergehenden Ansprüche, dadurch gekennzeichnet, daß die Werkstückbearbeitungseinrichtung (28) die zu bearbeitende rotationssymmetrische Fläche bzw. Flächen auf dem Werkstück (18) radial zangenförmig umfaßt.

6. Maschine nach einem der vorhergehenden Ansprüche, dadurch gekennzeichnet, daß der Reitstock (26) auf dem Schlitten (34) angeordnet ist.

7. Maschine nach einem der vorhergehenden Ansprüche, daduruch gekennzeichnet, daß das eingespannte Werkstück (18) gegenüber der Werkstückbearbeitungseinrichtung (28) eine rotierende oder/und oszillierende Bewegung durchführt.

8. Maschine nach einem der vorhergehenden Ansprüche, dadurch gekennzeichnet, daß die Werkstückbearbeitungseinrichtungen (28,28a) Superfinishgeräte mit einem oder mehreren Steinen sind.

9. Maschine nach einem der Ansprüche 1 bis 7, dadurch gekennzeichnet, daß die Werkstückbearbeitungseinrichtungen (28,28a) Schleifbandfinishgeräte mit für das Schleifband versehene Spulen in einer die zu bearbeitende Stelle umgreifenden Zange sind, wobei beim Öffnen oder Schließen der Zange du Schleifband weitertransportiert ist und insbesondere die Zange druckmediumbetätigt ist und daß für du abnehmbare Bearbeitungswerkzeug (28,28a) zwei Anschlüsse mit einem Rückschlagventil vorgesehen sind, welche bei abgenommenem Werkzeug (28,28a) mediumsdicht schließen und insbesondere das Schleifband über eine Umlenkrolle mit einer Nut in Umfangsrichtung geführt ist, in welche ein federbelasteter Stift bei nicht vorhandenem Schleifband eingreift.

10. Maschine nach einem der verhergehenden Ansprüche, dadurch gekennzeichnet, daß die für die Bearbeitung der Werkstücke (18) verwendeten Werkstückbearbeitungseinrichtungen (28) in schnell auswechselbaren Kassetten untergebracht sind, die auch notwendige Zuführ- und Lagereinrichtungen mitumfassen und als ganze Einheit austauschbar sind.

## Claims

1. Machine for superfinishing rotationally symmetrical surface sections on shaft-like workpieces (18), preferably for treating the surface of bearing places on camshafts or crankshafts, with different shaft-like workpieces (18) allocating processing stations (24), with a carriage (34) conveyable and fixable in the axis of the allocated workpiece (18), this carriage (34) carries several exchangeable workpiece processing means (28), a random number of which can be spaced apart (A) from each other and can be positioned together with the carriage (34) relative to the workpiece (18), characterized in common conveying means for automatically adjusting the mutual distance (A) of the workpiece processing means (28), which includes a carrier (30) mounted on the carriage (34), the workpiece processing means (28) are guided conveyable and fixable on the carrier (30), and which includes looking means for fixing the workpiece processing means (28) on the machine support in a parking position, so that the workpiece processing means (28) are conveyable with the carriage (34) from the parking position in predetermined distances to each other and are lockable on the carrier (30) in these positions.

2. Machine according to claim 1, characterized in that the common conveying means is a hydrautic or pneumatic means.

3. Machine according to claims 1 or 2, characterized in that the common conveying means is a motor-driven threaded spindle (32), whose degree of ration angle in storable and retrievable from a programmable memory means.

4. Machine according to anyone of the preceding claims, characterized in that each processing station (24) has one or several lifts (25) arranged side by side and has workpieces receptors (27), the central pair of which is aligned to a rotatably mounted driven workpiece clamping means (36) and a headstock (26) which is axially arranged to the clamping means (36) such that a shaft-like workpiece (18) can be gripped at its ends.

5. Machine according to anyone of the preceding claims, characterized in that the workpiece processing means (28) radially grips the rotationally symmetrical surface(s) to be processed on the workpiece (18) like tongs.

6. Machine according to anyone of the preceding claims, characterized in that the headstock (26) is mounted on the carriage (34).

7. Machine according to anyone of the preceding claims, characterized in that the clamed workpiece (18) makes a rational and/or an oscillational movement relative to the workpiece processing means (28).

8. Machine according to anyone of the preceding claims, characterized in that the workpiece processing means (28,28a) are superfinishing devices with one or several finishing stones.

9. Machine according to anyone of the claims 1 to 7, characterized in that the workpiece processing means (28,28a) are abrasive-belt finishing devices with reels for the abrasive-belt, which are provided in tongs gripping the place to be processed, the abrasive belt being moved farther during opening or closing of the tongs and that in particular the tongs are operated by a pressure medium and that two connections with a check valve are provided for the removable workpiece processing tool (28,28a), which close medium-tight after removal of the tools (28,28a) and that in particular the abrasive belt is led in a guide roller having a groove in circumferential direction in which a pin under sping lead engages in the absence of an abrassive belt.

10. Machine according to anyone of the preceding claims characterized in that the workpiece processing means (28) used for processing the workpiece (18) are accomodated in readily exchangeable cassettes which also comprise the necessary conveying and storage means and which can be exchanged as one single unit.

## Revendications

1. Machine pour la superfinition de parties de surfaces à symétrie de révolution sur des pièces (18) en forme d'arbres, de préférence pour l'usinage de surface des paliers d'arbres à cames ou de vilebrequins, comportant des postes d'usinage (24) recevant différentes pièces (18) en forme d'arbres et dotés d'un coulisseau (34) susceptible d'être déplacé dans l'axe de la pièce reçue (18) et bloqué en position, le coulisseau (34) portant plusieurs dispositifs interchangeables (28) d'usinage de pièces, un nombre quelconque de ces dispositifs pouvant être réglés à un écartement mutuel (A) et positionnés par rapport à la pièce (18) conjointement avec le coulisseau (34), caractérisée en ce qu'un dispositif transporteur commun est prévu pour le réglage automatique des écartements mutuels (A) des dispositifs (28) d'usinage de pièces, lequel dispositif comprend un élément porteur (30), disposé sur le coulisseau (34) et sur lequel les dispositifs (28) d'usinage de pièces peuvent être déplacés et bloqués, ainsi que des moyens de verrouillage pour fixer au bâti de la machine les dispositifs (28) d'usinage de pièces dans une position d'attente, de sorte que les dispositifs (28) d'usinage de pièces peuvent, à partir de cette position d'attente, être déplacés à l'aide du coulisseau (34) à des écartements mutuels prédéterminables et verrouillés dans ces positions sur l'élément porteur (30).

2. Machine selon la revendication 1, caractérisée en ce que le dispositif transporteur commun est un dispositif hydraulique ou pneumatique.

3. Machine selon la revendication 1 ou 2, caractérisée en ce que le dispositif transporteur commun est une broche filetée (32) à entraînement motorisé, dont la position de rotation peut être rentrée dans une mémoire programmable et appelée de cette dernière.

4. Machine selon l'une quelconque des revendications précédentes, caractérisée en ce que chaque poste d'usinage (24) présente une ou plusieurs paires juxtaposées constituées d'un élévateur (25) et d'un porte-pièce (27), la paire centrale étant, par rapport à un dispositif de serrage de pièce (36) et à une contre-poupée (26) en alignement axial avec ce dernier, alignée de telle sorte qu'une pièce (18) en forme d'arbre peut être saisie à ses extrémités.

5. Machine selon l'une quelconque des revendications précédentes, caractérisée en ce que le dispositif (28) d'usinage de pièces embrasse radialement, à la manière d'une pince, la ou les surfaces à symétrie de révolution de la pièce (18) qui doivent être usinées.

6. Machine selon l'une quelconque des revendications précédentes, caractérisée en ce que la contre-poupée (26) est disposée sur le coulisseau (34).

7. Machine selon l'une quelconque des revendications précédentes, caractérisée en ce que la pièce serrée (18) accomplit un mouvement de rotation et/ou d'oscillation par rapport au dispositif (28) d'usinage de pièces.

8. Machine selon l'une quelconque des revendications précédentes, caractérisée en ce que les dispositifs (28, 28a) d'usinage de pièces sont des appareils de superfinition à une ou plusieurs pierres.

9. Machine selon l'une quelconque des revendications 1 à 7, caractérisée en ce que les dispositifs (28, 28a) d'usinage de pièces sont des appareils de superfinition à bande, avec des bobines pour la bande abrasive agencées dans une pince s'engageant autour de l'emplacement à usiner, la bande abrasive étant avancée lors de l'ouverture ou de la fermeture de la pince, et la pince étant notamment actionnée par fluide sous pression, et en ce que deux raccords équipés d'une soupape de retenue sont prévus pour l'outil d'usinage amovible (28, 28a), lesquels raccords se ferment avec étanchéité au fluide lorsque l'outil (28, 28a) est déposé, et la bande abrasive passant en outre sur un galet de renvoi présentant une rainure circonférentielle, rainure dans laquelle s'engage un axe chargé par un ressort en l'absence de bande abrasive.

10. Machine selon l'une quelconque des revendications précédentes, caractérisée en ce que les dispositifs (28) d'usinage de pièces utilisés pour l'usinage des pièces (18) sont logés dans des cassettes rapidement interchangeables, qui comprennent également les moyens nécessaires d'alimentation et de montage, et peuvent être remplacées en tant qu'unités complètes.
